# EUROPEAN PATENT APPLICATION

(11) **EP 0 547 277 A1**
(43) Date of publication of application: **23.06.1993**
(21) Application number: 91430027.2
(22) Date of filing: 16.12.1991
(51) Int. Cl.: C08J 3/20, C08L 43/04, C08K 5/13, C08K 5/37, H01B 3/44

(54) **Process for producing stabilized silane copolymers**

(71) Applicant: BP Chemicals Limited, London EC2M 7BA (GB)
(72) Inventor: Lien, Klaus, CH-1217 Meyrin 2 (CH)
(74) Representative: Hymers, Ronald Robson

(57) **Abstract**

A process for producing stabilized silane copolymers comprising copolymerizing an unsaturated organic monomer, preferably ethylene, with an unsaturated silane compound containing hydrolysable groups, e.g. vinyl triethoxy silane, in a polymerization reactor and thereafter removing the molten polymer from the polymerization reactor and forming it into pellets in which process an antioxidant compound is contacted with and dispersed through the copolymer after the copolymer has been formed, but before forming it into pellets.

## Description

The present invention relates to a process for producing stabilized silane copolymers and to the stabilized silane copolymers obtainable by the process.

It is known that organic polymers containing hydrolysable silane groups which can be crosslinked by the action of water, preferably in the presence of a so-called "silanol condensation catalyst", can be produced by copolymerizing unsaturated organic monomers, for example, ethylenically unsaturated or vinyl monomers, with unsaturated silane compounds containing hydrolysable groups.

Examples of this copolymerization process are described in GB-A-2028 831 and GB-A-2039513 which disclose the preparation of crosslinkable copolymers of ethylene and an ethylenically unsaturated silane compound by copolymerizing the monomers at relatively high temperatures and pressures in the presence of a free radical polymerization initiator. Another example of this copolymerization method is described in GB-A-1415194 which discloses the preparation of crosslinkable copolymer by contacting ethylene and a terminally unsaturated silane compound, optionally with other olefinically unsaturated comonomer, with certain defined Ziegler catalysts under polymerization conditions which preferably employ relatively low temperatures and pressures

It is also known that organic polymers containing hydrolysable silane groups which are crosslinkable by the action of water preferably in the presence of a silanol condensation catalyst can be prepared by grafting an unsaturated silane compound on to a preformed polymeric material and examples of this process are disclosed in GB-A-1357549, GB-A-1234034 and GB-A-1286460.

Other known methods for forming polymeric materials having hydrolysable silane groups are the "transesterification" methods wherein a copolymer having exchangeable functions such as alkoxy groups (as, for example, in ethylene/vinyl acetate copolymer) is treated with a suitable silane compound in the presence of a special ester-exchange catalyst. An example of such a transesterification process is described in EP-A-0 004 752.

Polysiloxane-modified copolymers prepared by reacting a mixture containing an alkylene-alkyl acrylate copolymer and a polysiloxane in the presence of an organo titanate catalyst are also known. For example, European Patent N° 49 155 discloses the production of such polysiloxane-modified copolymers and European patent application EP 120 115 discloses compositions comprising a polysiloxane and an organo titanate and the use thereof in the production of such polysiloxane-modified alkylene-alkyl acrylate copolymers.

Although the polysiloxane-modified alkylene-alkylacrylate copolymers are water-curable, they have a very different molecular structure to those polymers prepared using monomeric silanes. According to European patent N° 49 155, the advantage of using a polysiloxane is that the polysiloxane-modified alkylene-alkyl acrylate copolymers produced are free of undesirable volatiles.

The present invention relates to a process for producing stabilized crosslinkable organic polymers having pendant, hydrolysable groups. Such polymers are herein referred to as "silane copolymers".

The present invention does not therefore relate to processes for producing organic polymers having pendant hydrolysable silane groups by either grafting or transesterification. Consequently, the terms "copolymer" and "copolymerization" as used hereinafter do not include copolymers produced by grafting or transesterification or copolymerization by grafting or transesterification.

Antioxidants are normally added to polymeric compositions requiring long life or elevated temperature service.

Antioxidants, and other additives, can be added to polymeric compositions by the manufacturer of the polymer itself, the producer of polymer compositions or the fabricator who manufactures articles from the polymer or polymer composition. The following types of additive compounding equipment are generally used : continuous single-step extruders that melt, mix and pump through a pelleting die in one operation; continuous two-step processes in which melting and mixing is separated from pumping and pelleting; batch two step pelleting processes in which the polymer is mixed and melted in a batch mixer and transferred to a calender/dicer for production of a diced sheet rather than pellets.

A common feature of these conventional compounding operations is that the polymer from the reactor which may be a powder but is often in the form of pellets must be remelted, blended with the antioxidant and then again formed into pellets.

The disadvantages of these conventional compounding operations include : higher capital and operating costs due to the separate compounding operation; the increased risk of the product becoming contaminated; and the increased risk of thermal degradation or crosslinking before or during the compounding step.

The process according to the present invention overcomes, or at least mitigates, the above mentioned problems with the conventional compounding operations. In addittion, it has been found that the process according to the present invention can produce products which, as a result of the reduced tendency to undergo thermal degradation and oxidative curing, produce extruded articles having an improved surface texture.

Thus according to the present invention a process for producing stabilised silane copolymers comprising copolymerizing an unsaturated organic monomer with an unsaturated silane compound containing hydrolysable groups in a polymerization reactor and thereafter removing the molten polymer from the polymerization reactor and forming it into pellets is characterised in that after the copolymer has been formed but before it is pelletized it is contacted with an antioxidant compound which is dispersed through the copolymer.

The process for copolymerizing the unsaturated organic monomer and the unsaturated silane compound will generally be a process substantially the same as the known high pressure processes for producing polyethylene i.e. a stirred autoclave process or a tubular process. The monomer being reacted at a relatively high temperature (150 to 400°C) and pressure (100-400 MPa) in the presence of a free-radical polymerization initiator and, optionally, a chain transfer agent.

In a stirred autoclave process, the monomers, initiators and chain-transfer agents are injected into the autoclave, generally at the top. The reaction occurs within the vessel at about 1150 - 300 MPa. The product is recovered by controlled discharge of the mixture of copolymer and monomers from the bottom of the reactor.

In a tubular process, the polymerization reactor is a long thick-walled tube which can be 2km long with an internal diameter of up to 6.4cm. The monomers, initiator and chain transfer agent are introduced into one end of the tube. The reaction occurs in a linear fashion within the tube and a mixture of copolymer and unreacted monomers is discharged through a pulsating valve to a lower pressure from the other end of the tube.

The copolymerization reaction is a typical free-radical polymerization involving free-radical initiation, polymer chain propagation and radical combination or chain transfer. The overall molecular weight and molecular weight distribution can be controled by the selection of the type and ratio of initiator and chain transfer agents. Known free radical initiators and chain transfer agents can be used, particularly those suitable for the polymerization or copolymerization of ethylene. Thus, for example, oxygen and peroxides can be used as initiators and suitable chain transfer agents include alkenes, olefins, ketones or aldehydes.

The polymerization temperature is generally controlled by heating one or more of the feed streams and cooling the polymerization reator.

Unreacted monomers are separated from the copolymer and after purification are recycled to the reactor inlet. For example, the unreacted monomers can be separated from the copolymer by flash devolitilization in one or more static vessels and then purified and cooled before being recycled to the reactor inlet. It is not necessary to separate the VTMS from the ethylene being recycled.

The molten copolymer is usually pumped through a multi-holed die over which high speed rotating knives are passed to cut the extruded strands into pellets. Cooling water is generally used to prevent sticking and agglomeration of the pellets. The melt pump is often an extruder.

According to the present invention, the antioxidant compound is contacted with the molten polymer after the copolymer has been formed but before it is pelletized. This can conveniently be done by introducing the antioxidant compound between the polymerization reactor and the pelletizer, preferably at or before the melt pump.

Any antioxidant suitable for use in silane copolymers can be used in the process according to the present invention but preferred are those which are liquid or can be readily dissolved in a volatile liquid. For example, the known phenolic antioxidants can be used. Specific examples of suitable antioxidants are 1,3,5 - trimethyl-2, 4, 6 tris [3, 5-di-tertiary butyl-4-hydroxybenzyl] benzene dissolved in toluene and 4,4'-thiobis (3'-tertiary-butyl-4'-hydroxyl phenyl) butyrate. The person skilled in the art will be able to select suitable antioxidants and the quantities to be used.

The silane copolymer employed in the present invention is, as mentioned above, an organic polymer containing pendant hydrolysable silane groups, which are not derived from a polysiloxane, which is crosslinkable by the action of water, preferably in the presence of a silanol condensation catalyst; the silane copolymer being formed by copolymerizing an unsaturated organic monomer and an unsaturated silane compound.

Preferably, the silane copolymer substantially comprises polymerized olefin units and more preferably is an ethylene polymer containing pendant, hydrolysable silane groups. Such ethylene polymers can comprise up to 30% by weight of monomer units other than the silane units. Preferably, however, the ethylene polymer comprises less than 10% by weight of such other monomers. Most preferably, the silane copolymer is a copolymer of ethylene units and silane units only.

The unsaturated silane compound has a hydrolysable silane group and an ethylenically unsaturated bond which is copolymerizable with the organic monomer.

The unsaturated silane compound employed in the process according to the present invention is preferably a compound having the general formula XSiX¹ₙY₃₋ₙ wherein : X represents an ethylenically unsaturated hydrocarbyl or hydrocarbyloxy group. X¹ represents an aliphatic saturated hydrocarbyl group; Y represents a hydrolysable organic group; and n represents zero, 1 or 2. X can be , for example, vinyl, allyl, isopropenyl, butenyl, cyclohexenyl or gamma-methracryloxypropyl. Y can be, for example, methoxy, ethoxy formyloxy, acetoxy, propionyloxy, alkylamino. X¹ can be, for example, methyl, ethyl, propyl, hexyl, octyl, decyl or phenyl. X is preferably a vinyl group, Y is preferably methoxy, ethoxy or acetoxy. Preferred unsaturated silane compounds are vinyl trimethoxy silane, vinyl triethoxy silane and vinyl triacetoxy silane.

The silane copolymer produced by the process of the present invention suitably contains from 0.1 to 10 weight %, preferably 0.5 to 5 weight %, more preferably 0.7 to 2 weight % of copolymerised units of the unsaturated silane compound (based on silane copolymer).

The present invention includes the silane copolymer obtainable by the process described hereinbefore.

The silane copolymer can be used to manufacture products using technology known for manufacturing articles from thermoplastic materials. For example, the silane copolymer can be used in blow-moulding, injection moulding, film-blowing, calendering, extrusion, rotomoulding and extrusion-coating techniques. The silane copolymer is particularly suitable for wire and cable applications. Wire and cable insulation produced by extrusion coating the silane copolymer can exhibit improved surface finish.

The silane copolymer can contain additives conventionally employed in the art. Examples of such additives are fillers, metal deactivators (e.g. salicylaldehyde oxime or hydrazine), lubricants, foaming agents, flame retardants and pigments. It can also contain antioxidant in addition to that included in the process according to the invention. The additives are conventionally incorporated directly or by a masterbatching technique.

The silane copolymer can also be blended with other compatible polymeric materials, for example, polyethylene, polypropylene, ethylene/ethyl acrylate copolymer and ethylene/alpha-olefin copolymers(e.g. linear low density polyethylene)
Articles fabricated from the silane copolymer can be readily crosslinked by exposure to water in the form of liquid, steam or moist air, preferably in the presence of a silanol condensation catalyst.

Any of the organometallic silanol condensation catalysts known in the art for crosslinking silane copolymers can be suitably employed to crosslink the silane copolymers produced according to the process of the present invention. They can be used in the quantities conventionally employed. Examples of suitable classes of organometallic silanol condensation catalysts are, for example complexes or carboxylates of lead, cobalt, iron, nickel, zinc and tin. Specific examples of the silanol condensation catalyst are dibutyl tin dilaurate, dibutyl tin diacetate, dibutyl tin dioctoate, stannous acetate, stannous caprylate, lead naphthenate, zinc caprylate, cobalt naphthenate; carboxylates of tin are preferred. Particularly preferred silanol condensation catalysts are dialkyl tin carboxylates, for example dibutyl tin dilaurate, dibutyl tin dipalmitate, dibutyl tin distearate, dioctyl tin dilaurate and dibutyl tin maleate.

The quantity of silanol condensation catalyst is suitably in the range 0.0001 to 0.5 moles, preferably in the range 0.0005 to 0.05 moles per mole of hydrolysable silane units in the silane copolymer.

Generally speaking, the quantity of the silanol condensation catalyst is in the range from 0.01 to 5% weight, most preferably 0.03 to 0.2% by weight, relative to the quantity of silane copolymer in the composition.

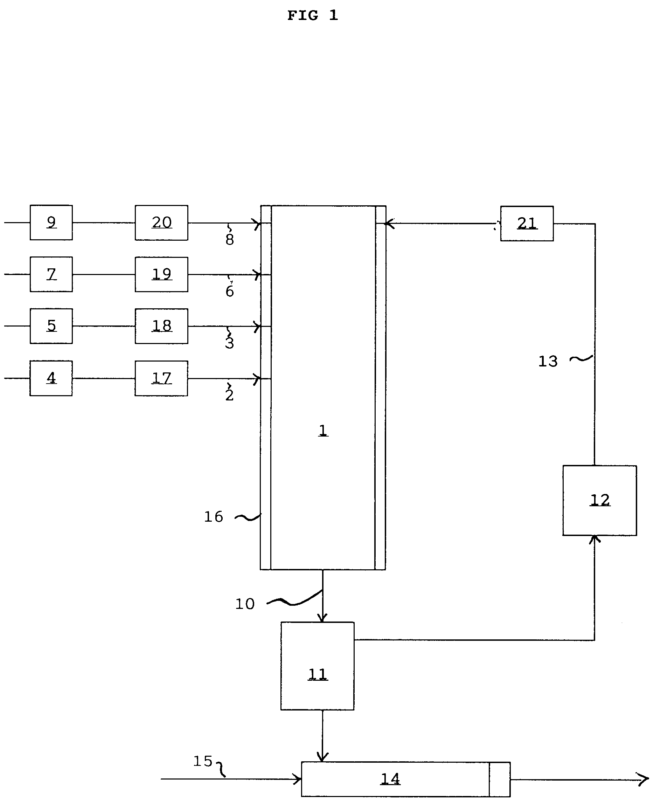

Figure 1 of the accompanying drawing is a schematic representation of a high pressure process for producing a stabilized silane copolymer according to the present invention.

The process according to the present invention for producing an ethylene-vinyltrimethoxy silane copolymer will now be illustrated with reference to Figure 1 in which the polymerization reactor (1) can be either a stirred autoclave or a tubular reactor.

Ethylene and vinyl triemethoxysilane are introduced into the polymerization reactor (1) by lines (2) and (3) respectively after pressurization to about 0.2 - 250 MPa in pressurization units (4) and (5) respectively. A chain transfer agent is introduced into the polymerization reactor via line (6) after pressurization in unit (7). A free-radical polymerization initiator is introduced into polymerization reactor (1) via line (8) after pressurization in unit (9). The silane copolymer and unreacted monomers are removed from the polymerization reactor via line (10). The silane copolymer melt is separated from the gaseous reactants in the low pressure separation unit (11). The unreacted monomers, after purification in unit (12) are recycled to the polymerization unit (1) via line (13). The polymer melt is transferred to an extruder/pelletizer (14) and the pellets are then transferred to storage or packaging (not shown).

A liquid antioxidant or a solution of an antioxidant is introduced into the extruder/pelletizer via line (15) where it is mixed with the copolymer before the latter is formed into pellets. Temperature control means (16 to 21) are associated with the polymerization reactor (1), the feed streams (2, 3, 6 and 8) and recycle (13.).

The invention is illustrated by the following Example and Comparative Test.

### Example and Comparative Test.

Ethylene was polymerised with vinyltrimethoxy silane in a high pressure reactor.

The ethylene-vinyltrimethoxy silane copolymer was removed from the reactor and transferred to a pelletizing extruder via a melt pump. The amount of vinyltrimethoxy silane incorporated in the copolymer was about 1.3% wt.

Some copolymer was pelleted without the introduction of an antioxidant. This was the unstabilised comparative product.

A stabilised silane copolymer according to the present invention was prepared by introducing into the copolymer 600 ppm of 1, 3, 3-trimethyl-2, 4, 6 tris [3, 5-di-tertiary butyl-4-hydroxy benzyl] benzene as a solution in toluene(90 parts by weight toluene to 10 parts by weight antioxidants). The antioxidant is a commercial product sold by Ciba Geigy under the trade designation IRGANOX 1330 (IRGANOX is a trade mark. The antioxidant was introduced into the copolymer to give 600 ppm, by injecting the solution into a vessel which received the product from the reactor, just upstream of the melt pump. The solution was pumped into the vessel using a pressure of about 2 MPa The pressure within this receiving vessel was about 50 kPa and the temperature was about 190 - 200°C. The toluene flashed off and was removed.

In order to assess the improvement in shelf-life of the stabilized silane copolymer as compared with the unsstabilized comparative product, samples of the copolymers were maintained at a temperature of 60°C and a relative humidity of 50% and their melt flow rates determined over a period of 250 days. Both materials had a starting Melt Flow Rate of 0.4g/10 mins. After 250 days the Melt Flow Rate of the unstabilized comparative product had reduced almost to zero whereas the stabilized silane copolymer according to the invention retained a Melt Flow Rate of about 0.15g/10 mins. This demonstrates that the stabilized copolymer according to the present invention would have an improved shelf life as compared with the unstabilized comparative product because less silane has hydrolysed and subsequently condensed to from Si-O-Si crosslinks which are responsible for the decrease in MFR.

Extruded film was produced from the stabilized silane copolymer and the unstabilized comparative product. Samples of the film were stored at ambient temperature (about 20°C) for one year. Fewer "gels" were observable in the film produced from the stabilized silane copolymer than in the film produced from the unstabilized comparative product. "Gels" are observable defects in the film caused by localised crosslinking.

## Claims

1. A process for producing stabilized silane copolymers comprising copolymerizing an unsaturated organic monomer with an unsaturated silane compound containing hydrolysable groups in a polymerization reactor and thereafter removing the molten polymer from the polymerization reactor and forming it into pellets characterised in that after the copolymer has been formed but before it is pelletized it is contacted with an antioxidant compound which is dispersed through the copolymer.

2. A process as claimed in Claim 1 in which the antioxidant is introduced into the copolymer after it has been removed from the polymerization reactor.

3. A process as claimed in claim 1 in which the antioxidant is introduced at or before a melt pump positioned between the polymerization reactor and the pelletizer.

4. A process as claimed in any one of claims 1 to 3 in which the antioxidant is 1, 3, 5-trimethyl-2, 4, 6 tris [3,5-ditertiary butyl-4-hydroxybenzyl] benzene or 4, 4'-thiobis(3'-tertiary-butyl-4'-hydroxyl phenyl]butyrate.

5. A process as claimed in any one of the preceeding claims in which the silane copolymer substantially comprises polymerized ethylene.

6. A process as claimed in any one of the preceeding claims in which the unsaturated silane compound is vinyl trimethoxy silane, vinyl triethoxysilane or vinyl triacetoxy silane.

7. A stabilized silane copolymer obtainable by the process of any one of claims 1 to 6.

8. An article produced by thermoforming a copolymer according to claim 7 and crosslinking by exposure to water.

9. A wire or cable comprising an extrusion coated layer of a stabilized silane copolymer as claimed in claim 7.
